# DEMANDE DE BREVET EUROPEEN

(11) **EP 3 470 014 A1**
(43) Date de publication de la demande: **17.04.2019**
(21) Numéro de dépôt: 18200003.4
(22) Date de dépôt: 12.10.2018
(51) Int. Cl.: A61C 13/30

(54) **RECONSTITUTION DENTAIRE CORONO-RADICULAIRE, PROCEDE DE REALISATION D'UNE TELLE RECONSTITUTION ET PROCEDE DE GRAVURE D'UNE TELLE RECONSTITUTION DENTAIRE**

(30) Priorité: 12.10.2017 FR 1759539
(71) Demandeur: Clunet-Coste, Bruno, 38960 Saint-Etienne-de-Crossey (FR); Maneuf, Bernard, 38500 Voiron (FR); Collombin, André, 38500 Voiron (FR)
(72) Inventeur: Clunet-Coste, Bruno, 38960 Saint-Etienne-de-Crossey (FR); Maneuf, Bernard, 38500 Voiron (FR); Collombin, André, 38500 Voiron (FR)
(74) Mandataire: Talbot, Alexandre

(57) **Abrégé**

Le procédé de reconstruction corono-radiculaire sur un modèle de laboratoire, comprend les étapes successives suivantes :
- Réaliser une empreinte de la chambre pulpaire pour former la partie coronaire de la reconstitution, au moins un canal radiculaire (2) obturé débouchant sur la chambre pulpaire;
- Réaliser une prothèse (1) à partir de l'empreinte, la prothèse (1) comportant au moins un canal traversant (3), ledit au moins un canal traversant (3) ayant une extrémité débouchant sur ledit au moins un canal radiculaire (2) ;
- Désobturer ledit au moins un canal radiculaire (2) ;
- Remplir ledit au moins un canal radiculaire (2) et ledit au moins un canal traversant (3) d'une colle (9) ;
- Installer la prothèse (1) de sorte que ledit au moins un canal traversant (3) débouche sur ledit au moins un canal radiculaire (2) désobturé,
- Introduire une pluralité de tiges de renfort (7) dans ledit au moins un canal radiculaire (2) à travers ledit au moins un canal traversant (3), ledit au moins un canal traversant (3) et ledit au moins un canal radiculaire (2) étant remplis par la pluralité de tiges de renfort (7) et la colle (9).

## Description

### Domaine technique de l'invention

L'invention est relative à un procédé de réalisation d'une reconstitution corono-radiculaire, à une reconstitution corono-radiculaire et à un procédé de gravure d'une tel reconstitution corono-radiculaire.

### État de la technique

En dentisterie, et notamment en endodontie, lors de la réalisation de reconstitutions dentaires corono-radiculaires, et en particulier pour reconstruire la partie coronaire d'une dent, la partie radiculaire de la dent est tout d'abord mise en forme par alésage. L'alésage est réalisé grâce à des outils rotatifs ou ultrasoniques cylindro-coniques.

Après mise en forme, un tenon est généralement introduit et scellé, dans le canal radiculaire, pour servir d'ancrage à une reconstitution coronaire. Pour assurer une bonne tenue mécanique, le tenon doit pénétrer jusqu'au tiers apical de la racine.

Les canaux radiculaires sont obturés hermétiquement avec des matériaux spécifiques, comme par exemple des cônes cylindro-coniques en gutta-percha, des pâtes à l'oxyde de zinc/eugénol, ou encore des résines sous forme de préparations bi-composantes.

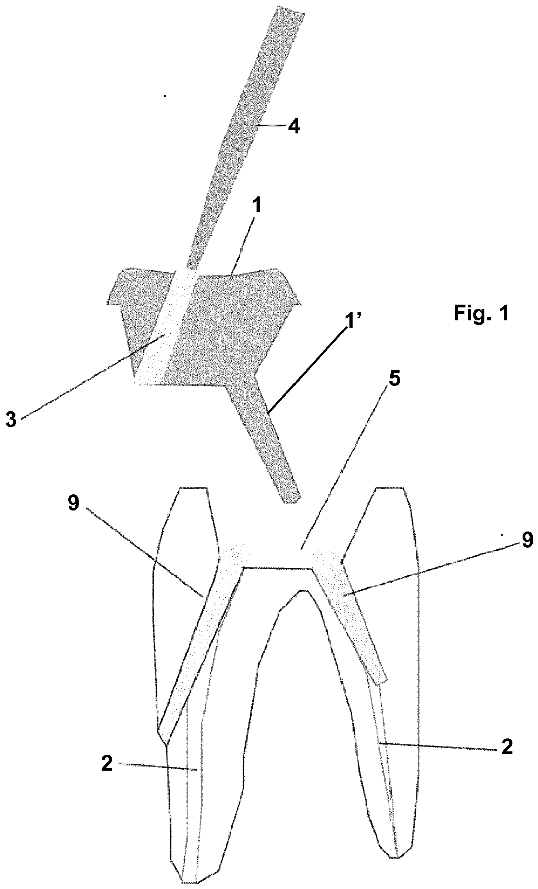

Dans un mode de réalisation classique illustré à la figure 1, la reconstitution corono-radiculaire est entièrement constituée d'un matériau compact qui peut être un métal ou un équivalent minéral, par exemple de la céramique et notamment de la zircone.

La reconstitution corono-radiculaire comporte une prothèse 1 en matériau compact qui est entièrement réalisée dans un laboratoire de prothèse 1 ou en centre d'usinage.

La prothèse 1 est réalisée par stratification, coulée ou injection en cire perdue, par stéréolithographie ou par usinage. La prothèse 1 est monobloc dans sa partie coronaire, camérale et au moins dans sa partie canalaire et radiculaire. La prothèse 1 comporte également une partie camérale et un ancrage canalaire radiculaire qui sont également réalisés dans un matériau compact, c'est-à-dire rigide et de dureté élevée.

Une fois les différents morceaux de la prothèse 1 réalisés, ces derniers sont assemblés. Lorsque la reconstitution dentaire corono-radiculaire ne comporte qu'un seul ancrage radiculaire, la reconstitution est monobloc dès sa fabrication au laboratoire. La reconstitution est scellée dans le canal radiculaire et sur la base coronaire pour former la reconstruction corono-radiculaire.

Selon les configurations, la fixation de la partie coronaire est réalisée en utilisant un ou plusieurs ancrages radiculaires. De manière particulièrement avantageuse, l'ancrage est réalisé en utilisant aux moins deux canaux radiculaires 2 divergents.

Dans un premier mode de réalisation illustré à la figure 1, la prothèse 1 monobloc comporte une partie coronaire et un premier tenon 1' destiné à former un ancrage radiculaire. La partie coronaire définit un canal traversant 3 rectiligne qui est configuré pour autoriser l'insertion d'un second ancrage radiculaire qui va s'insérer dans un second canal radiculaire 2. Le second ancrage radiculaire est formé par une structure de renfort A réalisée dans le même matériau que la prothèse 1.

La fixation de la prothèse 1 est obtenue en remplissant les canaux radiculaires 2 de colle 9 ainsi que le canal traversant 3 de la prothèse 1. Il apparait clairement que cette configuration de reconstitution corono-radiculaire nécessite en premier lieu de libérer la chambre pulpaire 5 et surtout les canaux radiculaires 2 pour réaliser l'empreinte de la partie coronaire, de la partie camérale et de l'ancrage additionnel 4 qui doit s'insérer dans le canal traversant 3 et dans le deuxième canal radiculaire 2.

Il apparait également que la prothèse 1 étant exclusivement réalisée dans des matériaux rigides, il n'est pas possible de réaliser des ancrages courbes ou de forme quelconque car ces derniers ne pourront pas s'insérer de manière à suivre l'anatomie des différents canaux radiculaires 2 utilisés pour l'ancrage. Avec cette technique, il est nécessaire de mettre en forme le canal radiculaire 2 c'est-à-dire de modifier sa forme initiale par alésage afin de normaliser sa forme avec celle des tenons 1' et 4.

Or, le canal 2 est souvent de forme irrégulière, par exemple de section aplatie, ovale ou en forme de huit. Le canal peut être très évasé dans sa partie coronaire et de section ovalaire. Le canal peut également être courbe et mal centré, il est également possible que les racines soient plates ou concaves. Pour mettre en place le tenon 1' ou 4 dans le canal radiculaire 2 et ainsi former l'ancrage, il est nécessaire d'élargir le canal 2 et d'en rectifier le trajet.

La pose du tenon peut être dangereuse car la préparation du logement par alésage mécanique, oblige à réaliser des préparations circulaires avec un déplacement du canal radiculaire du côté de la courbe. Il s'ensuit un affaiblissement de la paroi canalaire et un risque élevé de fragilisation et de perforation du canal 2.

De plus, dans la volonté de rechercher un contact maximum entre le tenon et les murs canalaires, il faut également essayer de limiter la mutilation dentinaire. Un compromis doit alors être réalisé entre, d'une part, l'utilisation de forets de diamètre élevé ce qui augmente le risque de perforation et, d'autre part, l'utilisation d'un foret de diamètre raisonnable mais le tenon ne possédera pas de contacts avec les zones non instrumentées ce qui peut se traduire par un mauvais collage et/ou une mauvaise transmission des contraintes.

Il a été constaté que la chambre pulpaire d'une molaire inférieure possède dans certains cas une forme parallélépipède rectangle. La totalité des racines mésiales sont courbes et possèdent une concavité de la paroi distale, et 99% des molaires présentent une concavité de la paroi mésiale. Les prémolaires supérieures possèdent une concavité mésiale et des racines frêles. Le canal est de section ovale ou en forme de huit dans son premier tiers coronaire. La seule partie rectiligne du canal se trouve en général située au premier tiers coronaire de la racine et le canal est évasé avec une section aplatie. En utilisant un tenon rigide, il faut systématiquement retravailler la forme de canaux radiculaires.

Ainsi, la rectification du canal 2 pour le normaliser à la forme du tenon 1' ou 4 et le rendre rectiligne affaiblit la tenue mécanique de la racine dentaire. Dans le cas d'une reconstitution dentaire corono-radiculaire en matériau rigide, l'alésage rectiligne des canaux radiculaires est présenté comme une voie incontournable avec pour conséquence une fragilisation de la racine dentaire.

Une approche alternative est présentée dans le document US 5,915,970 où la reconstruction corono-radiculaire comporte un tenon flexible associé à un espaceur. L'espaceur peut être flexible et/ou résistant au choc. La reconstitution comporte également un noyau également appelé « core » qui recouvre le tenon et l'espaceur. Le noyau est finalement recouvert par la couronne. La couronne est réalisée dans un matériau rigide pour supporter les efforts masticatoires. Le tenon peut être formé par des tiges ou fibres flexibles qui sont torsadées les unes sur les autres ou par une tige rigide.

Le noyau est un élément standardisé qui peut être installé en même temps que le tenon. Ce procédé de fabrication est particulièrement difficile à mettre en oeuvre car il nécessite de remplir le canal radiculaire avec le tenon puis d'installer ou ajuster le noyau. Ensuite, il est nécessaire d'installer le capot et d'adapter ce dernier à la configuration définie par le noyau. Enfin, la couronne est installée sur le noyau. La disposition du noyau est fortement liée à la forme du canal radiculaire ce qui complique l'installation du capot qui doit être réalisé sur mesure. Cela complique également l'installation de la couronne.

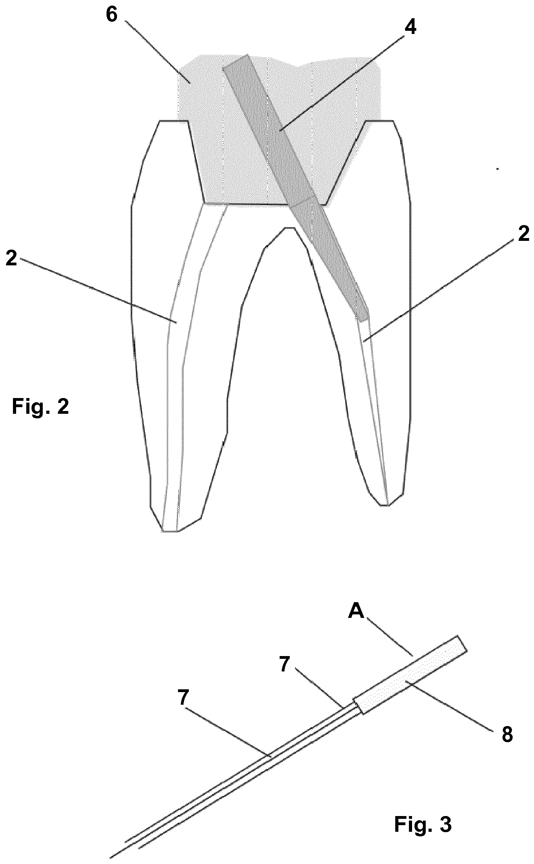

Devant la complexité de ce procédé de réalisation, il a été proposé une approche différente illustrée à la figure 2 où le canal radiculaire 2 est travaillé et mis en forme afin de pouvoir y installer un tenon rigide 4. Comme indiqué plus haut, le tenon 4 étant réalisé dans un matériau rigide, il est nécessaire de modifier la forme du canal radiculaire 2 afin de pouvoir y installer le tenon 4. Le praticien doit élargir le canal 2 et en rectifier le trajet. La pose du tenon 4 peut donc être dangereuse. Comme indiqué plus haut, la préparation du logement du tenon 4, par alésage mécanique, oblige à des préparations circulaires avec un déplacement du canal 2 du côté de la courbe, un affaiblissement de la paroi canalaire et un risque élevé de fragilisation et de perforation.

Une fois le tenon 4 installé, le reste de la reconstitution corono-radiculaire est réalisée à partir de matériaux composites 6 introduits en phase plastique et polymérisés par la suite. Cette opération est réalisée sans l'intervention d'un laboratoire de prothèse ou d'un centre d'usinage, mais elle est longue et nécessite une certaine expérience.

Par ailleurs, les matériaux 6 utilisés pour former la partie coronaire de la reconstitution sont des matériaux moins rigides et moins résistants que le tenon 4 qui est généralement en métal ou en céramique. Le risque de fragilisation ou de détérioration de la reconstitution est plus important que pour une reconstitution en céramique ou en métal. Par ailleurs, la zone la plus rigide de la reconstitution étant introduite dans la racine, les contraintes sont introduites profondément ce qui augmente le risque de détérioration du canal radiculaire 2 et complique voire interdit tout réparation a posteriori. Un tel enseignement est présenté dans les documents FR2588181, US4936776, DE 3825601 et EP 0432001. Les tenons 4 présentent une forme finie cylindrique ou cylindro-conique rectiligne et une structure rigide.

En alternative, le document FR-A-2753365 décrit un tenon endo-canalaire. Le tenon est formé d'une âme enrobée de manchons. L'âme en matériau composite est semi-rigide et élastique : elle est composée d'une matrice organique renforcée par des fibres. Les manchons sont en matériau composite préimprégné de résine, et se trouvent dans un état pâteux d'avant polymérisation.

Une amélioration de ces procédés a été proposée dans le document FR 3020264. Le document décrit l'utilisation d'une structure de renfort A formée d'une pluralité de micro-tenons 7 fixés ensemble par un élément assemblage 8.

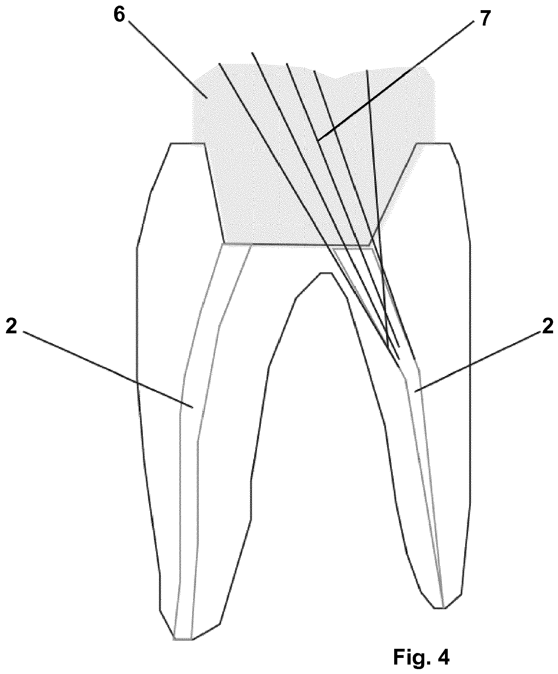

Le canal radiculaire 2 est désobturé et des micro-tenons 7 illustrés à la figure 3 sont introduits dans le canal 2 sous la forme d'un ou plusieurs fagots de micro-tenons. Le reste de la reconstitution est réalisé au moyen de matériaux 6 insérés en phase plastique pour former la partie coronaire. Le canal radiculaire 2 est également rempli par une colle ou résine. Un tel mode de réalisation est illustré à la figure 4.

Avant et pendant son introduction dans le canal radiculaire 2, la structure de renfort est flexible et malléable. La colle est ensuite polymérisée à la demande par des moyens de réticulation pour passer dans un deuxième état polymérisé.

Ce type de renfort permet un alésage moins important du canal 2, réduisant les risques de fragilisation ou de perforation des parois canalaires.

Cette solution permet de moins solliciter le canal radiculaire 2, mais elle ne permet pas de former une reconstitution aussi solide que son équivalent céramique car le volume occupé par les micro-tenons 7 est limité au cône constitué par l'ouverture canalaire.

### Objet de l'invention

L'invention a pour but de remédier aux inconvénients de l'art antérieur et, en particulier, de proposer un procédé de fabrication d'une reconstitution corono-radiculaire, sur un modèle de laboratoire, qui est facile à mettre en oeuvre et qui permet de réaliser une reconstitution plus solide sans introduire un jeu de contraintes excessif dans le canal radiculaire.

On tend vers cet objet au moyen d'une structure de renfort pour reconstitution dentaire corono-radiculaire comprenant :
- Réaliser une empreinte de la chambre pulpaire pour définir la partie coronaire de la reconstruction, la chambre pulpaire débouchant sur au moins un canal radiculaire obturé ;
- Réaliser une prothèse à partir de l'empreinte, la prothèse comportant au moins un canal traversant, ledit au moins un canal traversant ayant une extrémité débouchant sur ledit au moins un canal radiculaire ;
- Désobturer ledit au moins un canal radiculaire ;
- Remplir ledit au moins un canal radiculaire et ledit au moins un canal traversant d'une colle ;
- Installer la prothèse de sorte que ledit au moins un canal traversant débouche sur ledit au moins un canal radiculaire désobturé,
- Introduire une pluralité de tiges de renfort dans ledit au moins un canal radiculaire à travers ledit au moins un canal traversant, ledit au moins un canal traversant et ledit au moins un canal radiculaire étant remplis par la pluralité de tiges de renfort et la colle.

Dans un développement, le canal traversant est courbe ou possède une section variable sur sa longueur.

Dans un mode de réalisation particulier, ledit au moins un canal radiculaire est désobturé sans aléser la paroi latérale dudit au moins un canal radiculaire.

De manière avantageuse la pluralité de tiges de renfort est introduite sous la forme d'un faisceau de tiges fixées les unes aux autres par un élément d'assemblage.

Préférentiellement, l'élément d'assemblage est configuré pour grouper la pluralité de tiges de renfort de manière à former le faisceau de tiges, ledit élément d'assemblage recouvrant partiellement la longueur des tiges de renfort.

Dans un mode de réalisation avantageux, au moins un faisceau de tiges comporte une tige additionnelle réalisée dans un matériau se gravant plus rapidement que la pluralité de tiges de renfort de manière à former un canal de gravure.

Il est avantageux de prévoir que l'élément d'assemblage soit configuré pour grouper la pluralité de tiges de renfort et la tige additionnelle de manière à former le faisceau de tiges. L'élément d'assemblage recouvre partiellement la longueur des tiges de renfort, la tige additionnelle étant fixée directement ou indirectement à l'élément d'assemblage entre les tiges de renfort.

Dans un mode de réalisation avantageux, la tige additionnelle est fixée à la tige de renfort adjacente sur au moins 70% de sa longueur.

Dans un autre développement, le faisceau de tiges comprend de 3 à 15 tiges de renfort et/ou dans lequel les tiges de renfort de la pluralité de tiges de renfort ont des diamètres allant de 0,1 mm à 0,5mm.

Avantageusement, le procédé comporte une étape additionnelle de polymérisation de la colle après l'introduction des tiges de renfort dans ledit au moins un canal radiculaire et ledit au moins un canal traversant.

Préférentiellement, le procédé comporte, avant de réaliser l'empreinte de la chambre pulpaire, marquer au moins un canal radiculaire dans une chambre pulpaire, le marquage du canal radiculaire étant avantageusement réalisé par un renfoncement à l'entrée du canal radiculaire.

Dans un mode de réalisation particulier, avant l'étape de polymérisation, une deuxième structure de renfort est déposée à côté de la première structure de renfort, la deuxième structure de renfort étant dépourvue de canal de gravure et la première structure de renfort étant disposée au centre du canal dentaire.

L'invention a également pour objet une reconstitution dentaire corono-radiculaire, sur un modèle de laboratoire qui soit simple à réaliser et qui améliore la tenue mécanique en limitant le jeu de contrainte dans le canal radiculaire.

On tend à atteindre cet objectif au moyen d'une reconstitution dentaire corono-radiculaire sur un modèle de laboratoire comportant :
- une prothèse comportant au moins un canal traversant, ledit au moins un canal traversant ayant une extrémité débouchant dans au moins un canal radiculaire ;
- une pluralité de tiges de renfort disposée dans ledit au moins un canal radiculaire et ledit au moins un canal traversant de sorte qu'une même tige de renfort relie un canal traversant avec un canal radiculaire,
- une colle remplissant le canal radiculaire et le canal traversant.

La reconstitution dentaire étant remarquable en ce que la prothèse est réalisée dans un matériau ayant un module de Young plus élevé que le module de Young de la pluralité de tiges de renfort et que le module de Young de la colle.

Dans un développement, la pluralité de tiges de renfort est introduite sous la forme d'un faisceau de tiges fixées les unes aux autres par un élément d'assemblage. Au moins un faisceau de tiges comporte une tige additionnelle réalisée dans un matériau se gravant plus rapidement que la pluralité de tiges de renfort de manière à former un canal de gravure.

L'invention a également pour objet un procédé d'ouverture d'une reconstitution dentaire corono-radiculaire, sur un modèle de laboratoire qui soit simple à réaliser et qui facilite la réalisation d'un accès à la partie apicale du canal dentaire une fois la reconstitution effectuée.

On tend à atteindre cet objectif au moyen d'un procédé comprenant les étapes suivantes :
- Graver le canal de gravure au moyen d'un foret en utilisant au moins une tige de renfort de la structure de renfort comme guide pour l'enfoncement d'un foret.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1 représente, de manière schématique, en coupe, un premier mode de réalisation d'une reconstitution dentaire corono-radiculaire selon l'art antérieur,
- la figure 2 représente, de manière schématique, en coupe, un deuxième mode de réalisation d'une reconstitution dentaire corono-radiculaire selon l'art antérieur,
- la figure 3 représente, de manière schématique, en coupe, un premier mode de réalisation d'une structure de renfort formée de micro-tenons assemblés sous la forme d'un fagot selon l'art antérieur,
- la figure 4 représente, de manière schématique, en coupe, un troisième mode de réalisation d'une reconstitution dentaire corono-radiculaire selon l'art antérieur muni de tiges de renfort dans une matrice polymère,
- les figures 5, 6, 7, 8, 9 et 10 représentent, de manière schématique, des étapes consécutives d'un procédé de réalisation d'une reconstitution corono-radiculaire selon l'invention,
- la figure 11 représente de manière schématique la gravure d'un canal à l'intérieur d'une reconstitution corono-radiculaire selon l'invention.

### Description d'un mode de réalisation préférentiel de l'invention

Afin de réaliser une reconstitution corono-radiculaire dont la tenue dans le temps est améliorée, les inventeurs ont observé qu'il est particulièrement avantageux d'avoir une partie coronaire et avantageusement camérale qui est réalisée dans un matériau rigide et un ancrage radiculaire qui est réalisé dans un matériau moins rigide. De manière avantageuse, la partie coronaire est réalisée dans un matériau isotrope et l'ancrage radiculaire est formé dans un matériau anisotrope.

Il est également apparu qu'il est particulièrement avantageux d'avoir un ancrage radiculaire qui est formé par une pluralité de tiges de renfort introduites dans une colle. Les tiges de renfort sont réalisées dans un matériau flexible ce qui permet aux tiges de suivre la forme du canal radiculaire sans avoir besoin de le remettre en forme comme cela est le cas lorsque l'on utilise un tenon unique rigide. Par exemple un tenon en métal ou en céramique.

De manière particulièrement avantageuse, les tiges de renfort sont libérées de leur manchette de préhension et réorganisées de façon homogène dans le canal radiculaire désobturé disponible au moyen d'un instrument approprié, par exemple une sonde dentaire.

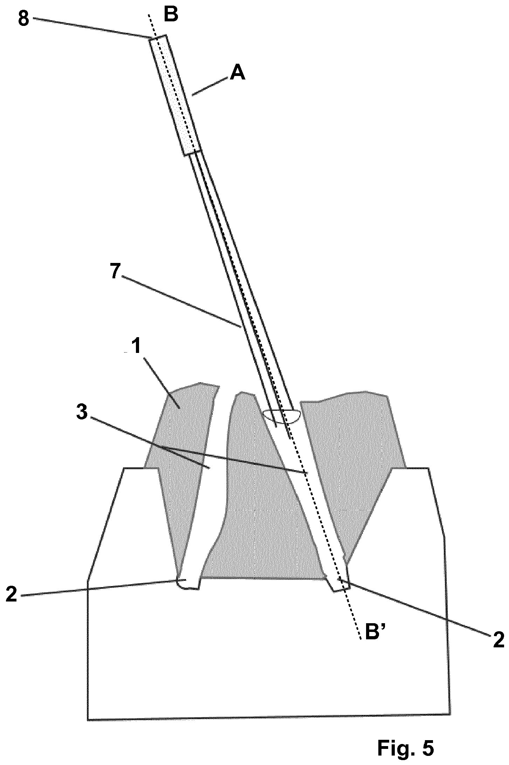

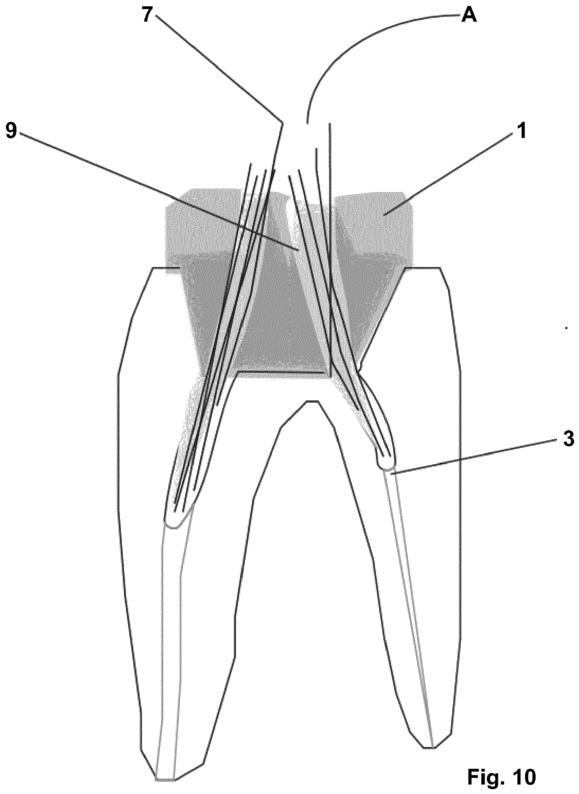

Comme illustré à la figure 5 et à la figure 10, Il est particulièrement avantageux de prévoir une reconstitution dentaire corono-radiculaire qui possède une prothèse 1 comportant au moins un canal traversant 3. Le au moins un canal traversant 3 possède une extrémité débouchant dans au moins un canal radiculaire 2. De cette manière, il est possible d'installer une ou plusieurs tiges de renfort 7 qui réalisent la connexion mécanique entre le canal radiculaire 2 et le canal traversant 3 de la prothèse 1.

La reconstitution dentaire comporte une structure de renfort A formée par une pluralité de tiges de renfort 7 disposée dans ledit au moins un canal radiculaire 2 et ledit au moins un canal traversant 3 de sorte qu'une même tige de renfort 7 relie un canal traversant 3 avec un canal radiculaire 2.

La reconstitution dentaire comporte une colle 9 remplissant le canal radiculaire 2 et le canal traversant 3. La colle 9 va permettre de réaliser le lien chimique et mécanique entre la paroi canalaire et les tiges de renforts 7 ainsi que le lien chimique et mécanique entre les tiges de renfort 7 et la prothèse 1. La colle 9 va également assurer la fixation de la prothèse 1 avec les parois de la chambre pulpaire 5.

La prothèse 1 est réalisée dans un matériau ayant un module de Young plus élevé que le module de Young de la colle 9 et éventuellement plus élevé que le module de Young de la pluralité de tiges de renfort 7. De cette manière, les efforts appliqués sur la partie sommitale de la reconstitution sont retransmis dans le canal radiculaire 2 à travers les tiges de renfort 7 et la colle 9. Ces matériaux étant moins rigides, les risques de détérioration du canal radiculaire 2 sont fortement réduits. Dans un mode de réalisation avantageux, la prothèse 1 est réalisée dans un matériau qui présente une résistance à la flexion supérieure ou égale à 300 MPa et module d'élasticité supérieur ou égal à 80 Gpa. La prothèse peut être fabriquée dans un matériau qui est par exemple une céramique, comme de la zircone, un matériau métallique ou un matériau pulvérulent consolidé par frittage.

A titre d'exemple, il est possible d'utiliser une zircone commercialisée sous la dénomination Katana par la société Kuraray. Cette zircone possède un module de Young compris entre 130MPa et 150Mpa ainsi qu'un module d'élasticité égal à 95 GPa. Cette zircone peut présenter une résistance à la flexion compris entre 300MPa et 1200MPa, de préférence entre 300MPA et 700MPA

Par ailleurs, afin d'assurer une bonne retransmission des efforts entre la partie coronaire en matériau rigide et la partie radiculaire, il est particulièrement avantageux de prévoir que les tiges de renfort 7 soient présentes sur au moins 50% de la hauteur de la prothèse 1. De manière encore plus préférentielle, les tiges de renfort 7 sont présentes sur au moins 80% de la hauteur de la prothèse Dans un mode de réalisation préférentiel, pour favoriser une bonne transmission des efforts, le volume occupé par les tiges de renfort 7 est au moins égal au volume occupé par la colle 9 dans le canal traversant 3 de la prothèse 1. Il peut en être de même dans le canal radiculaire 2.

Dans cette configuration, la prothèse 1 en matériau rigide prend appui sur les parois latérales de la chambre pulpaire 5 comme cela est le cas avec une dent saine. Les efforts sont donc mieux répartis sur la partie cervicale et camérale de la racine ce qui évite une trop forte sollicitation des canaux radiculaires 2.

Les canaux 2 sont également sollicités afin d'assurer une tenue mécanique plus proche des sensations procurées par une dent saine.

Cette configuration innovante peut être mise en place au moyen d'un procédé qui est également innovant.

Le procédé de reconstruction corono-radiculaire comprend une pluralité d'étapes technologiques.

En premier lieu, il convient de réaliser une empreinte de la chambre pulpaire 5 pour former la partie coronaire et camérale de la reconstruction, la chambre pulpaire 5 débouchant sur au moins un canal radiculaire 2 obturé. Dans les procédés de l'art antérieur, le canal radiculaire a été vidé et éventuellement retravaillé afin de s'adapter à la forme du tenon défini dans la prothèse ou servant d'ancrage.

Dans le cas présent, le ou les canaux radiculaires 2 sont obturés et, avantageusement, ils n'ont jamais été désobturés jusque-là. De cette manière, la forme de l'empreinte est plus proche de l'empreinte de la dent à remplacer ce qui facilite l'acceptation de la future prothèse 1 par rapport à la dent initiale.

En outre, lors de la réalisation d'une l'empreinte selon l'art antérieur, la désobturation préalable des canaux entraine la formation d'une zone de rétention pour le matériau utilisé pour définir l'empreinte, par exemple du silicone. Cette dernière se déforme ou se déchire de sorte que l'empreinte et donc le modèle de laboratoire qui en découle comportent des inexactitudes préjudiciables à l'obtention d'une prothèse parfaitement ajustée et passive. Ce point est particulièrement important car une prothèse non passive est constamment à l'origine de fractures et fissures dans la dentine coronaire.

Cela permet également de moins solliciter les canaux radiculaires 2 en évitant de les vider une première fois pour la prise d'empreinte, puis de les remplir durant la période de réalisation de la prothèse 1 pour enfin les solliciter une nouvelle fois lors de l'installation de la prothèse 1. Les risques infectieux liés à la phase d'attente pour la fabrication de la prothèse 1 sont ainsi évités.

Pour faciliter la réalisation d'un canal traversant 3 qui débouche face à l'entrée d'un canal radiculaire, il est avantageux de marquer le canal radiculaire 2 dans la chambre pulpaire 5. Le marquage du canal radiculaire 2 est avantageusement réalisé par un renfoncement à l'entrée du canal radiculaire 2, avant de réaliser l'empreinte de la chambre pulpaire 5. Le renfoncement peut être obtenu au moyen d'une fraise boule ou d'une fraise similaire ou par tout autre moyen capable de définir le renfoncement.

Une prothèse 1 est réalisée à partir de l'empreinte. La prothèse 1 comporte au moins un canal traversant 3. Selon les modes de réalisation, la prothèse 1 comporte un ou plusieurs canaux traversants 3. Dans l'exemple de réalisation illustré, la prothèse 1 comporte deux canaux traversants 3. Chaque canal traversant 3 possède une extrémité qui débouche sur un canal radiculaire 2.

Comme illustré à la figure 5, il est particulièrement avantageux d'avoir un canal traversant 3 qui débouche sur un canal radiculaire 2 afin de pouvoir insérer une pluralité de tiges de renfort 7 qui assureront la transmission des efforts entre la prothèse 1 et le canal 2.

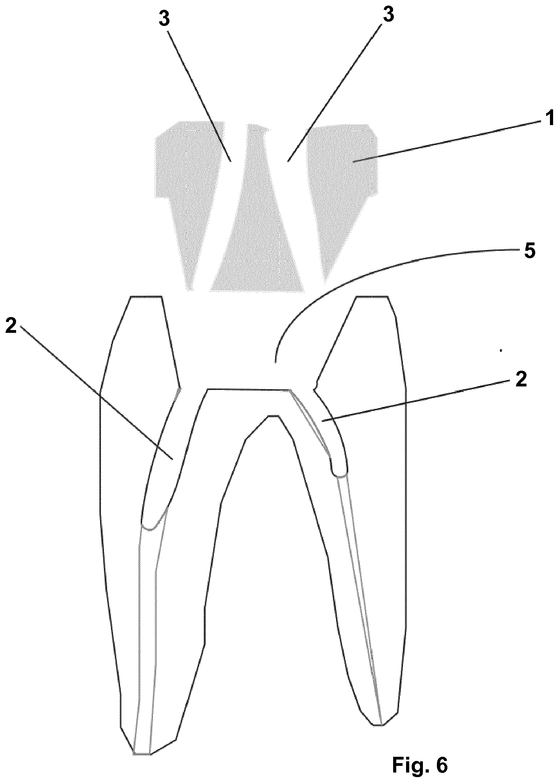

Comme illustré à la figure 6, une fois la prothèse 1 prête, il est particulièrement avantageux de désobturer le canal radiculaire 2. Ainsi, le canal radiculaire 2 est préparé au dernier moment, évitant tout risque infectieux lié à la temporisation nécessaire à phase de fabrication.

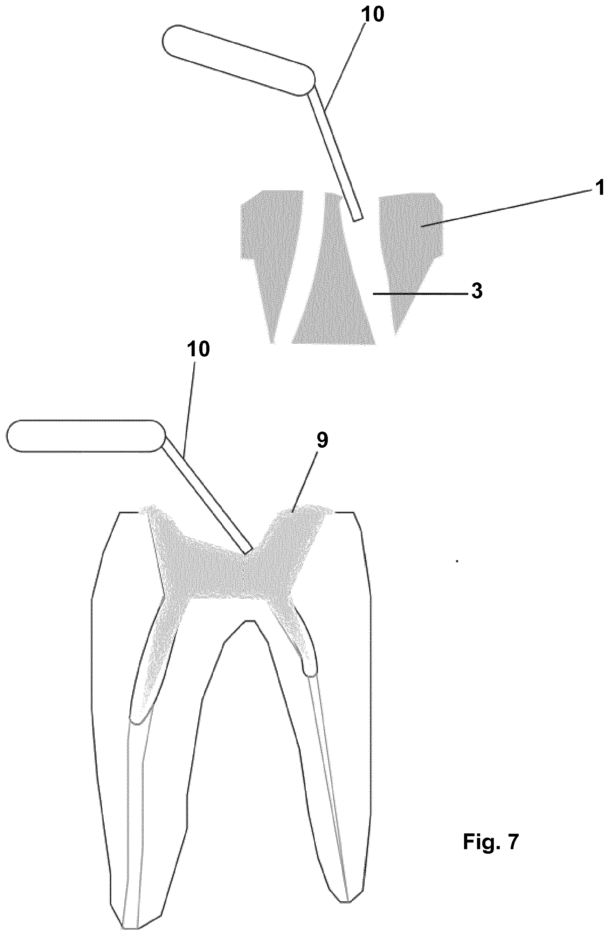

Comme illustré à la figure 7, le canal radiculaire 2 et le canal traversant 3 sont remplit par une colle 9. Selon les modes de réalisation, le canal radiculaire 2 et le canal traversant 3 sont remplis par la même colle ou par des colles différentes afin de mieux s'adapter aux contraintes. A titre d'exemple, la colle 9 est introduite au moyen d'une canule 10. Dans le mode de réalisation illustré à la figure 7, la prothèse 1 est dissociée de la chambre pulpaire 5 lors de l'introduction de la colle 9. Cependant, il est également possible de prévoir que la chambre pulpaire 5 et les racines 2 soient remplies de colle 9 et que la prothèse 1 soit introduite par la suite avec éventuellement ajout de colle 9 dans les canaux traversants 3.

Dans un mode de réalisation particulier, il est possible d'utiliser une colle 9 pour réaliser la connexion entre les parois latérales de la prothèse 1 et les parois latérales de la chambre pulpaire 5.

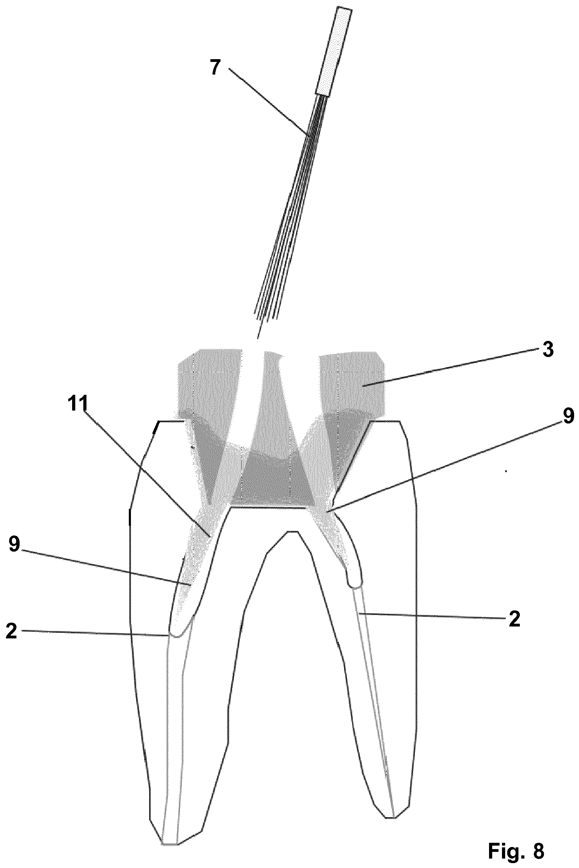

Comme illustré à la figure 8, la colle 9 réalise la liaison mécanique et chimique entre le canal radiculaire 2 et le canal traversant 3. La colle 9 est dans un état qui autorise l'introduction à venir des tiges de renfort 7.

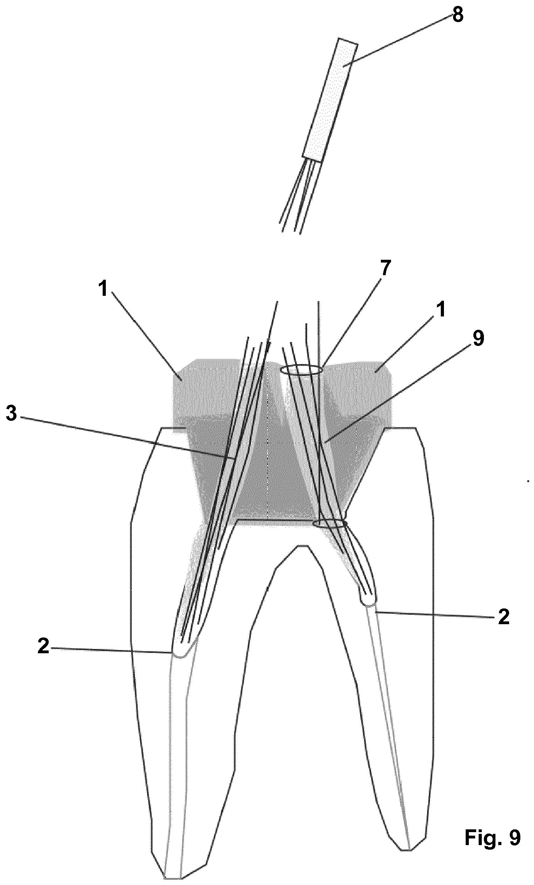

Comme illustré à la figure 9, une fois la prothèse 1 et la colle 9 installées, les tiges de renfort 7 sont introduites. Il est particulièrement avantageux d'introduire les tiges de renforts depuis la prothèse 1 car les tiges 7 vont suivre le canal traversant 3 jusqu'à atteindre l'entrée du canal radiculaire 2. En continuant de pousser les tiges de renfort 7, ces dernières vont suivre le chemin défini par le canal radiculaire 2 quelle que soit sa forme.

Il est particulièrement avantageux de prévoir que le canal traversant 3 débouche sur la partie sommitale de la prothèse 1 afin de faciliter l'insertion des tiges de renfort 7.

L'utilisation des tiges de renfort 7 réalisées dans un matériau flexible permet d'utiliser un canal traversant 3 rectiligne et de section constante comme cela est illustré aux figures 5 à 10. Cependant, cela permet également d'utiliser un canal traversant 3 courbe et/ou un canal traversant 3 dont la section est quelconque et peut varier selon la direction longitudinale du canal traversant 3. La tige de renfort 7 va se déformer afin de suivre le chemin défini par les canaux.

Cette configuration permet de relâcher les contraintes sur les procédés de fabrication de la prothèse 1. En effet, lorsque le canal traversant 3 n'est pas rectiligne et de section constante, les procédés de l'art antérieur imposaient d'usiner le canal traversant 3 ou de refabriquer une nouvelle prothèse 1.

L'utilisation de canaux traversant 3 courbe permet de déplacer le point d'entrée des tiges de renfort 7 dans la partie sommitale de la prothèse 1 et ainsi autorise l'insertion des tiges dans une zone plus facile pour le praticien.

La colle 9 étant à l'état visqueux ou liquide dans le canal traversant 3 et dans le canal radiculaire 2, cette dernière ne bloque pas la progression des tiges de renfort 7.

Dans un mode de réalisation particulier, le canal radiculaire 2 est désobturé sans déformer la paroi latérale du canal radiculaire. Ce mode de réalisation permet de conserver l'anatomie originale du canal radiculaire 2.

Il est avantageux de prévoir que la pluralité de tiges de renfort 7 soit introduite sous la forme d'un faisceau de tiges fixées les unes aux autres par un élément d'assemblage 8. Cette configuration permet une introduction facilitée des multiples tiges de renforts 7 qui sont utilisés pour remplir les canaux. Chaque canal peut être rempli par un fagot de tiges de renfort ou par une pluralité de fagots de tiges de renfort 7 également appelée structure de renfort A.

Après insertion des multiples tiges de renforts 7, et avant polymérisation de la colle 9, il est avantageux de séparer l'élément d'assemblage 8 et les tiges de renfort. Par exemple, la séparation est réalisée par section des tiges de renfort 7 ou tout autre procédé adapté. Il devient ainsi plus aisé de répartir les tiges de renforts 7 dans le volume du canal traversant 3 et du canal dentaire 2, de les courber individuellement ou de produire la translation des tiges de renforts 7 choisis, et ainsi de combler le volume du canal traversant 3 et du canal dentaire 2. Il est procédé au moyen d'un outil approprié tel qu'une sonde dentaire.

Comme illustré à la figure 3, la reconstitution dentaire corono-radiculaire comprend une prothèse 1 qui est associée à une structure de renfort sous la forme d'un faisceau de tiges 7. Par faisceau de tiges 7, on entend un ensemble d'éléments longilignes liés ensemble. Les différentes tiges sont sensiblement parallèles les unes aux autres et elles sont au moins orientées selon la même direction générale.

Le faisceau comprend au moins deux tiges 7. Préférentiellement, le faisceau comprend de 2 à 15 tiges, et encore, plus préférentiellement, de 3 à 15 tiges et, encore plus préférentiellement, de 3 à 5 tiges. Le nombre de tiges 7 est, avantageusement, inversement proportionnel au diamètre des tiges 7.

Les tiges 7 sont, avantageusement, de longueur identique. Elles forment ainsi un faisceau de forme homogène. Dans une variante de réalisation, les tiges 7 peuvent être de longueurs différentes, leurs extrémités étant décalées.

Les tiges 7 sont avantageusement flexibles pour pouvoir s'insérer facilement dans le canal radiculaire 2 et le canal traversant 3 et s'adapter à la morphologie complexe des canaux. Par flexible, on entend un élément souple, qui peut se courber facilement pour suivre la forme des canaux. Sur la figure 5, les tiges 7 sont droites : elles sont représentées de manière schématique. En réalité, comme elles sont flexibles, elles peuvent présenter une forme courbe.

Les tiges 7 ont un très faible diamètre. Par faible diamètre, on entend un diamètre inférieur ou égal à 0,5mm et avantageusement compris entre 0,1mm et 0,5mm.

Les tiges 7 peuvent s'adapter ainsi à de nombreuses structures canalaires, même à des structures très exiguës.

Selon un mode de réalisation, les tiges 7 ont un diamètre identique, c'est-à-dire que toutes les tiges ont à peu près le même diamètre à 0,05 mm près. Selon un autre mode de réalisation, les tiges 7 ont une section croissante depuis le centre du faisceau vers la périphérie du faisceau.

Par exemple, les tiges peuvent avoir un diamètre croissant au fur et à mesure qu'elles se rapprochent d'un centre de la structure de renfort. Par exemple, le diamètre peut être égale à 0,5mm proche du centre et les tiges en position périphérique peuvent avoir un diamètre de 0,3mm.

Selon un autre exemple, le faisceau peut être formé de deux tiges de 0,5 mm de diamètre, de deux tiges de 0,3 mm de diamètre et de deux tiges de 0,15 mm de diamètre.

Le diamètre de la tige peut aussi varier tout au long de sa longueur et la tige peut avoir une géométrie cylindro-conique, cylindrique à étage, en double conicité ou encore avec une conicité variable sur toute sa longueur.

Selon un autre mode de réalisation, les tiges 7 peuvent avoir une section décroissante depuis le centre du faisceau vers la périphérie du faisceau.

Les tiges 7 sont avantageusement en matériau composite : les tiges 7 sont formées d'au moins une fibre enrobée d'une première matrice polymère. Préférentiellement, chaque tige 7 comporte plusieurs fibres agencées sous la forme d'un assemblage de fibres, les fibres pouvant être, par exemple, torsadées et éventuellement floquées, recouverte d'un revêtement.

Avantageusement, la première matrice polymère sera choisie par l'homme du métier afin de permettre une association solide des fibres entre elles pour former une tige composite fibrée résistante.

Les fibres sont, de préférence, des fibres longues unidirectionnelles. Les fibres d'une même tige sont enrobées dans une matrice polymère. Chaque tige est formée de fibres enrobées dans une matrice polymère. Les tiges sont, de préférence, individuellement, entièrement polymérisées de manière à former des tiges flexibles indépendantes les unes des autres.

Les fibres jouent le rôle de renfort au sein des tiges, dans leur grand axe (axe BB' de la figure 5).

Les fibres des tiges 7 peuvent être de nature identique ou différente, au sein d'une même tige. Les fibres peuvent de nature identique ou différente d'une tige à l'autre.

Toute sorte de fibre peut être utilisée dans la mesure où elle possède un revêtement de surface (ou « coating » en anglais) compatible avec la résine d'assemblage utilisée. Il peut s'agir de fibres manufacturées artificielles, comme des fibres siliceuses, des fibres de carbone, ou encore des fibres organiques (du type poly(p-phénylènetéréphtalamide) (PPD-T), aramide, nylon...) ou même des fibres naturelles. Des fibres minérales peuvent être utilisées.

Comme représenté sur les figures 5 et 9, les tiges 7 sont assemblées, connectées mécaniquement par un élément d'assemblage 8. Toutes les tiges 7 sont maintenues ensemble par l'élément d'assemblage 8. L'élément d'assemblage 8 est configuré pour grouper la pluralité de tiges 7.

L'élément d'assemblage 8 recouvre partiellement la longueur des tiges 7 et est configuré pour tenir mécaniquement les tiges ensemble et pour laisser libre une partie de la longueur des tiges 7.

Le moyen d'assemblage 8 est disposé de manière à ce qu'au moins la moitié de la longueur des tiges 7 ne soit pas solidarisée par le moyen d'assemblage 8. De manière avantageuse, le moyen d'assemblage 8 est disposé de manière à ce que moins du tiers de la longueur des tiges 7 ne soit pas solidarisée par le moyen d'assemblage 8. En d'autres termes, le moyen d'assemblage 8 recouvre moins de la moitié de la longueur des tiges 7 et avantageusement moins du tiers de la longueur des tiges 7.

L'élément d'assemblage 8 est, par exemple, positionné dans le premier tiers de la longueur du faisceau de tiges 7, de manière à permettre la flexion des tiges 7 par rapport à l'élément d'assemblage et éventuellement la flexion d'une tige par rapport à l'autre.

Préférentiellement, l'élément d'assemblage 8 est disposé à une des extrémités du faisceau de tiges 7, pour entraver, au minimum, la liberté de flexion des tiges 7. Par extrémité, on entend que l'élément d'assemblage 8 est positionné sur le premier quart de la longueur de la tige.

Les tiges 7 sont maintenues d'un seul côté et peuvent former un faisceau évasé. Par faisceau évasé, on entend un faisceau de tiges ayant la forme d'un bouquet, c'est-à-dire que la section du faisceau de tiges 7 au niveau de l'élément d'assemblage est strictement inférieure à la section du faisceau de tiges au niveau de l'extrémité libre, i.e. l'extrémité opposée à l'élément d'assemblage 8. Cependant les tiges 7 peuvent être assemblées de façon circulaire, ovale ou selon une section plane, en fonction de la forme que lui donnera l'élément d'assemblage 8.

Les tiges 7 peuvent être solidarisées à leur extrémité mais les extrémités peuvent ne pas coïncider, par exemple, dans le cas de tiges 7 de longueurs différentes.

Encore plus préférentiellement, l'élément d'assemblage 8 est positionné sur le bout des tiges 7, le bord extrême des tiges, c'est-à-dire que les tiges ne dépassent que d'un côté de l'élément d'assemblage 8.

L'élément d'assemblage 8 peut être en résine composite. La résine est choisie parmi les résines méthacrylate, poly éther éther cétone (PEEK) et époxyde. Il est également possible de réaliser l'élément d'assemblage 8 avec une gaine thermorétractable.

La résine peut contenir des additifs, sous forme de colorants minéraux ou organiques, ainsi que des particules micrométriques ou nanométriques destinées à en modifier la consistance ou les performances mécaniques.

Par exemple, les tiges 7 sont maintenues par un manchon en résine composite polymérisée. Par manchon, on entend une pièce cylindrique ouverte au moins en une de ces deux extrémités.

L'élément d'assemblage 8 peut être réalisé par un collage des extrémités des tiges avec une colle composite. Cette technique est, préférentiellement, choisie lorsque les extrémités des tiges sont décalées. On décale les extrémités des tiges, dans l'élément d'assemblage 8, lorsqu'un apex fin, pointu est recherché pour le faisceau de tiges.

L'élément d'assemblage 8 est configuré pour maintenir les tiges 7 ensemble lors de leur manipulation. Il est également configuré de telle sorte qu'il est possible de retirer des tiges 7 une à une ou par petite quantité dans le cas où la structure d'accueil du faisceau de tiges est de dimension inférieure au faisceau de tiges.

Lorsqu'une ou plusieurs tiges 7 sont retirées, l'élément d'assemblage 8 continue à maintenir les tiges restantes. L'énergie pour arracher une tige du faisceau est inférieure à l'énergie nécessaire pour ouvrir ou casser l'élément d'assemblage 8. De cette manière, la taille du faisceau de tiges 7 est adaptable en fonction des besoins.

Dans un mode préférentiel de l'invention, le moyen d'assemblage 8 n'empêche pas les tiges 7 de glisser les unes par rapport aux autres sur au moins un dixième de leur longueur et il les bloque ou les retient au-delà de cette distance. Par exemple, les tiges 7 peuvent glisser les unes par rapport aux autres selon leur grand axe (axe BB' de la figure 5). Les tiges 7 peuvent se croiser au sein de la structure de renfort.

Dans un mode de réalisation préférentiel, au moins un faisceau de tiges comporte une tige additionnelle réalisée dans un matériau se gravant plus rapidement que la pluralité de tiges de renfort de manière à former un canal de gravure.

Lors des tentatives d'accès à un apex infecté qui fait suite à une reconstitution corono-radiculaire, les risques de fragilisation ou de perforation des parois canalaires sont liées à la difficulté de graver la reconstitution selon une direction maitrisée sur toute la profondeur de la reconstitution.

Les inventeurs ont observé qu'il est difficile de maitriser la direction de la gravure à cause de la dureté et de la résistance mécanique des structures de renfort qui sont insérées dans la reconstitution dentaire corono-radiculaire. Lorsque les tenons sont exclusivement en métal ou en céramique, la gravure du tenon est incontrôlable. Il en est de même lorsque les canaux sont remplis par un mélange de colle 9 et de tige de renfort 7.

Comme indiqué précédemment, le canal est rempli par un matériau composite qui comporte au moins une résine polymère associée à des renforts sous la forme de tiges.

Le canal est rempli par un élément composite formé par des matériaux ayant des performances mécanique très différentes. Ces différences de comportement mécaniques sont recherchées pour faciliter la réalisation de la reconstitution corono-radiculaire et assurer une bonne transmission des contraintes. Cependant, ces configurations compliquent fortement les opérations de gravure pour atteindre un apex infecté. Il est donc proposé une structure de renfort modifiée qui permet de sécuriser l'étape de gravure d'un canal d'accès qui fait suite à la réalisation de la reconstitution corono-radicalaire.

Il est proposé d'introduire une pluralité de tiges de renfort dans ledit au moins un canal radiculaire à travers le canal traversant 3. Le canal traversant 3 et le canal radiculaire 2 sont remplis par la pluralité de tiges de renfort 7 et la colle 9.

Afin de faciliter les opérations d'accès aux zones apicales de la racine dentaire, il est particulièrement avantageux de définir un canal de gravure privilégiée 6 à l'intérieur de la structure de renfort A.

Ce canal de gravure privilégiée est configuré pour s'éliminer plus facilement que les tiges de renfort 7 de la structure de renfort A. Ce canal de gravure privilégiée est configuré pour définir un canal qui sera gravé plus facilement que le reste de la structure de renfort A ce qui va permettre de réduire les risques de fragilisation ou de perforation des parois canalaires en contraignant la direction de la gravure dans la reconstitution corono-radiculaire.

Afin de mieux maitriser la direction de la gravure, les inventeurs proposent de réaliser un canal de gravure privilégiée qui va se graver plus facilement que les autres matériaux de la reconstitution de manière à mieux contraindre le chemin de gravure.

Le canal de gravure est avantageusement réalisé dans un matériau qui présente des performances à l'abrasion inférieures aux performances à l'abrasion des matériaux formant les tiges de renfort 7. De manière avantageuse, le matériau formant le canal de gravure présente une dureté inférieure à la dureté du matériau utilisé pour former les tiges 7. Dans un mode de réalisation préférentiel, la dureté du matériau formant le canal de gravure est inférieure ou égale à 90% de la dureté du matériau formant les tiges 7, encore plus préférentiellement inférieure ou égale à 70% de la dureté du matériau formant les tiges 7.

La dureté peut être une dureté Vickers ou une dureté Shore selon les matériaux utilisés. Il est également possible d'utiliser des duretés Rockwell, Brinell ou Meyer.

Il est également avantageux de prévoir que le canal de gravure soit réalisé dans un matériau qui présente des performances à l'abrasion inférieures aux performances à l'abrasion du matériau formant la matrice polymère 9 qui remplit le canal traversant et le canal radiculaire. De manière avantageuse, le matériau formant le canal de gravure présente une dureté inférieure à la dureté du matériau utilisé pour former la matrice polymère, c'est-à-dire la colle 9. Dans un mode de réalisation préférentiel, la dureté du matériau formant le canal de gravure est inférieure ou égale à 90% de la dureté du matériau formant la matrice polymère, encore plus préférentiellement inférieure ou égale à 70% de la dureté du matériau formant la matrice polymère.

La structure de renfort A comporte une tige additionnelle qui est différente des tiges de renfort 7. La tige additionnelle va définir le canal de gravure privilégiée. Selon les modes de réalisation, la tige additionnelle est fixée directement aux tiges de renfort 7 et/ou à l'élément d'assemblage 8. Dans un mode de réalisation particulier, la tige additionnelle est dépourvue de contact direct avec l'élément d'assemblage 8. De manière avantageuse, la tige additionnelle est en contact direct avec au moins une des tiges de renfort 7.

La structure de renfort A est utilisée dans la future reconstitution corono-radiculaire afin de former une zone à abrasion privilégiée qui est entourée par les tiges de renfort 7 qui forment des zones à abrasion réduite. Les tiges de renfort 7 vont contraindre le foret dans un espace prédéfini afin qu'il grave préférentiellement le canal de gravure. Il est avantageux de prévoir que la tige additionnelle présente une longueur égale à au moins 90% de la plus petite tige de renfort 7 de la structure de renfort A.

Afin de contraindre efficacement la direction d'enfoncement du foret lors de l'opération de gravure, il est particulièrement avantageux de mettre les tiges de renfort 7 en contact avec le canal de gravure. De cette manière, lors de l'insertion de la structure de renfort A, les tiges de renfort 7 restent proches du canal de gravure.

De manière encore plus avantageuse, les tiges de renfort 7 sont en contact avec le canal de gravure et sont mécaniquement fixées au canal de gravure. De cette manière, lors de l'insertion de la structure de renfort A, les tiges de renfort restent en contact du canal de gravure. Si le canal de gravure se déforme lors de la réalisation de la reconstitution corono-radiculaire, il en va de même des tiges de renfort 7. Dans un tel mode de réalisation, il est particulièrement avantageux de limiter l'encombrement de la structure de renfort A en réduisant le nombre de tiges 7. En alternative, il est possible de prévoir que certaines tiges de renfort 7 soient fixées directement au canal de gravure et que d'autres tiges 7 ne soient pas fixées directement au canal de gravure tout en étant solidaires par l'intermédiaire du moyen d'assemblage 8. Les tiges non fixées au canal de gravure peuvent remplir le canal dentaire afin de renforcer la future reconstitution corono-radiculaire.

Dans un mode de réalisation préférentiel, la tige additionnelle formant le canal de gravure est fixée aux tiges 7 sur une distance représentant au moins 70 % de sa longueur.

Dans cette configuration, la forme prise par le futur canal de gravure à l'intérieur du canal dentaire est également prise par la pluralité de tiges de renfort 7 qui vont contraindre la direction du foret lors de la future étape de gravure. Il est particulièrement avantageux de prévoir que le futur canal de gravure 6 soit fixé à la pluralité de tiges de renfort 7. De cette manière, plusieurs tiges de renfort 7 sont liées entre elles et elles se déforment de la même manière.

Lors de l'élimination du canal de gravure privilégiée, les tiges de renfort 7 qui entourent le canal de gravure vont contraindre le foret pour qu'il suive la direction du canal de gravure. Les risques de perforation des parois canalaires à cause d'un foret qui s'est enfoncé selon une mauvaise direction sont très fortement réduits.

Il est avantageux de prévoir que les tiges de renfort 7 présentent une longueur au moins égale à celle du canal de gravure en partant du moyen d'assemblage 8.

Il est possible de prévoir que chaque tige 7 présente une extrémité libre mobile en flexion par rapport aux autres tiges 7 du faisceau de tiges. Les tiges dépassent préférentiellement du canal de gravure selon l'axe longitudinal dans les zones libres en flexion.

Dans un mode de réalisation particulier, la structure de renfort A comporte au moins une tige qui présente une extrémité libre mobile en flexion et en translation par rapport aux autres tiges 7 du faisceau de tiges et par exemple par rapport aux tiges 7 fixées au canal de gravure. Les tiges 7 peuvent aussi glisser librement les unes par rapport aux autres selon leur grand axe, tout en étant freinées par leur frottement réciproque.

Le diamètre maximal du canal de gravure est avantageusement inférieur à 1,2mm. En effet, dans ces configurations, les matériaux formant le canal de gravure sont protégés par les tiges de renfort 7.

Les inventeurs ont observé que lorsque le canal de gravure est utilisé seul, c'est-à-dire hors de la structure de renfort A avec des tiges de renfort 7 entourantes, les contraintes d'utilisation liées au canal de gravure sont importantes. Si le canal de gravure est trop rigide, il risque de se casser lors de son introduction dans le canal dentaire 2 car il ne pourra pas facilement se déformer pour suivre la forme du canal dentaire 2. En revanche, si le matériau est trop flexible ou trop fluide, le canal de gravure ne sera pas en mesure de supporter son poids. L'introduction sera alors très difficile et le canal de gravure se déformera sans suivre la forme du canal dentaire 2. Il apparait également que ces contraintes de réalisation favoriseront la réalisation de canaux de gravure ayant des diamètres importants ce qui n'est pas toujours utilisable.

Au contraire, dans la structure de renfort A proposée, si le matériau de la tige additionnelle est trop rigide, il peut de se fissurer mais il restera accroché aux tiges de renfort 7 qui définiront la forme du canal de gravure. En revanche, si le matériau est trop flexible, il ne se tient pas tout seul mais il est supporté par les tiges de renfort 7.

Les configurations précitées sont donc particulièrement avantageuses car elles permettent un plus grand choix dans les matériaux utilisables pour former le canal de gravure et dans les dimensions utilisables

Le canal de gravure peut par exemple être formé dans un matériau thermoplastique et préférentiellement en élastomère thermoplastique. Il est particulièrement avantageux de prévoir la formation d'un canal de gravure en polyisoprène et avantageusement en polyisoprène synthétique. Il est également possible de réaliser le canal de gravure en cis-1,4-polyisoprène ou en trans-1,4-polyisoprène et avantageusement dans un trans-1,4-polyisoprène dont la masse moléculaire est comprise en 16000 et 18000g/mol. Il est particulièrement avantageux de réaliser le canal de gravure 6 en gutta-percha (sous ses formes alpha, beta et gamma) ou en gutta-balata. Dans un mode de réalisation particulier, le canal de gravure est dépourvu de résine polymérisable. Il est particulièrement avantageux de prévoir que le canal de gravure est exclusivement réalisé en matériau thermoplastique ou en matériau textile imprégné de résine.

L'utilisation de gutta-percha est particulièrement avantageuse car elle peut être chargée avec des éléments radio-opaques qui permettent d'observer aisément le canal de gravure 6 après la reconstitution corono-radiculaire, avant l'étape de gravure ou en cours de gravure afin de déterminer la distance séparant le trou formé et la paroi dentaire.

Dans un mode de réalisation particulièrement avantageux, le matériau formant le canal de gravure comporte 20% massique de gutta-percha, entre 35% et 75% massique d'oxyde de zinc, entre 2% et 30% massique de sulfate de baryum qui permet de rendre le mélange radio opaque. Il est également possible d'adjoindre entre 1 et 4% massique d'un plastifiant, par exemple une cire et/ou une résine afin d'obtenir la viscosité recherchée.

Il est avantageux de remplir le canal dentaire 2 par un matériau polymère 9 qui est une matrice organique et plus particulièrement par un matériau choisi parmi les résines acrylates, les résines méthacrylates, les résines polyméthacrylates, les résines uréthane diméthacrylates, les résines bis phénol-a-glycidil diméthacrylate-époxy.

De cette manière, il est alors possible de graver le canal de gravure privilégiée à l'intérieur de la structure de renfort A de la reconstitution dentaire corono-radiculaire, le canal de gravure privilégiée permet de contraindre la direction d'enfoncement du foret dans la reconstitution dentaire.

Avantageusement, l'élément d'assemblage 8 n'empêche pas les tiges 7 non liées au canal de gravure, aussi appelées micro-tenons, de se déplacer entre elles dans les trois dimensions.

Il est particulièrement avantageux de polymériser la colle 9 qui est préférentiellement une résine composite de manière à fixer la prothèse 1 avec le canal radiculaire 2 et les tiges de renfort 7.

En alternative moins avantageuse, la structure de renfort 1 est installée dans le canal dentaire 2 avant de remplir le canal traversant 3 et le canal radiculaire avec la colle 9.

La polymérisation de la colle 9 est réalisée alors que la structure de renfort A se trouve dans le canal dentaire 2 afin de figer sa position.

Afin de faciliter l'accès au fond de la reconstitution, il est particulièrement avantageux de placer la structure de renfort A munie d'un canal de gravure au centre ou sensiblement au centre du canal dentaire 2 dans un plan de coupe qui est perpendiculaire à l'axe longitudinal du canal dentaire 2. Les inventeurs ont observé que les plus fortes contraintes mécaniques se situent sur le bord des canaux radiculaires 2. En plaçant le canal de gravure au centre d'un canal radiculaire 2, l'accès est sécurisé sans modifier la tenue mécanique générale de la reconstitution. Les autres structures de renfort A qui sont placées dans la reconstitution et à la périphérie permettent d'assurer une bonne tenue mécanique en étant placées à la périphérie.

Selon les modes de réalisation, l'élément d'assemblage 8 dépasse du canal dentaire (figure 9). Ce dernier mode de réalisation est avantageux car il est possible de supprimer l'élément d'assemblage 8 une fois que les tiges de renfort 7 sont fixement installées dans le canal traversant 3 et le canal radiculaire 2.

Le faisceau de tiges 7 enrobé de colle 9, en contact intime avec les parois du canal radiculaire 2 et du canal traversant 3, forme un ensemble mécaniquement compact et cohérent, réalisant ainsi une continuité volumique, participant à la répartition des contraintes sans rupture de charge et sans présenter de zones de concentration des contraintes à l'origine des fractures.

Il est avantageux de prévoir que la colle 9 soit une résine activable par un initiateur chimique et/ou par un rayonnement électromagnétique qui est de préférence un rayonnement visible. La polymérisation permet de constituer une reconstitution dentaire corono-radiculaire assurant sa rigidité par sa propre forme et l'architecture de ses renforts.

Le nombre de tiges et/ou le diamètre des tiges introduits dans les canaux 2 et 3 sont adaptés en fonction de la forme et de la taille de la cavité destinée à recevoir les structures de renfort A.

Lorsque la structure de renfort A est dépourvue de canal de gravure, les tiges 7 de chaque structure de renfort A sont avantageusement indépendantes les unes des autres et s'adaptent par flexion à la morphologie naturelle d'un canal dentaire 2 sans alésage à une forme définie.

Selon un mode de réalisation préférentiel, l'élément d'assemblage 8 est une gaine thermo-rétractable. Par thermo-rétractable, on entend un élément possédant la propriété de se rétracter sous l'action de la chaleur. Par gaine, on entend un étui, un fourreau pouvant s'adapter à la forme, dimension du faisceau de tiges. L'élément d'assemblage 8 est, avantageusement, utilisé comme préhenseur.

Préférentiellement, et comme représenté sur la figure 9, les structures de renfort A, munies de gaine thermo-rétractable, sont insérées dans le canal : les tiges 7 se situent au niveau de la partie radiculaire du canal et l'élément d'assemblage 8 est positionné au-dessus de la partie coronaire. L'élément d'assemblage 8 est en position distale par rapport à la partie apicale du canal dentaire.

Dans cette configuration (élément d'assemblage disposé à l'opposé de la partie apicale du canal dentaire), l'élément d'assemblage 8 peut être éliminé à la fin du procédé de réalisation de la reconstitution dentaire corono-radiculaire.

Le nombre de structures de renfort A insérées dans le canal dentaire 2 dépend de la taille dudit canal. De manière avantageuse, de une à dix structures de renfort A sont insérées dans le canal dentaire 2.

La reconstitution corono-radiculaire peut être réalisée, par exemple, sur des modèles dentaires de laboratoire. La reconstitution dentaire corono-radiculaire épouse et respecte les particularités anatomiques et physiologiques du canal radiculaire 2.

La ou les structures de renfort A se prolongent dans tout le volume de la partie radiculaire et de la partie coronaire supra gingivale de la reconstitution dentaire corono-radiculaire. Elles permettent de renforcer en continuité la totalité du matériau de la reconstitution constituant la partie coronaire mais aussi la partie radiculaire.

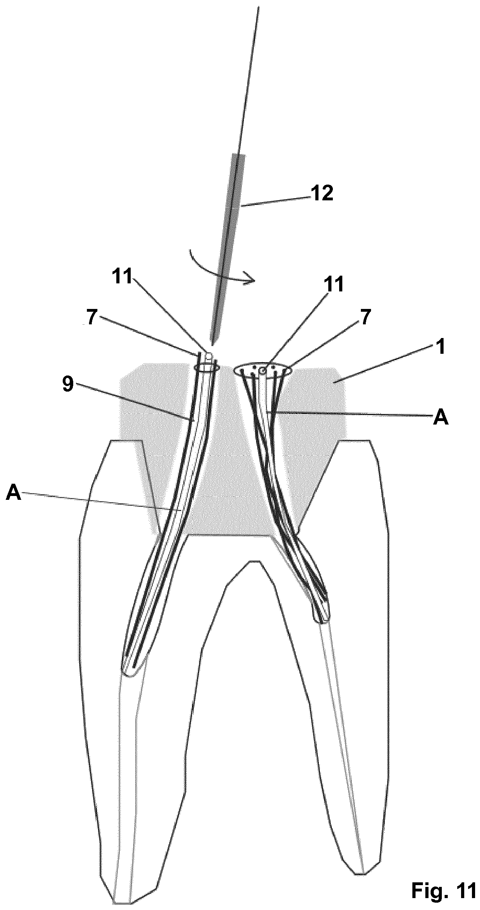

Après la réalisation de la reconstitution corono-radiculaire, s'il est nécessaire d'accéder à un apex infecté, la partie supérieure de la reconstitution peut être éliminée de manière à accéder au canal de gravure et aux tiges de renfort 7. Le canal de gravure est gravé avantageusement au moyen d'un foret. Les tiges 7 et/ou la colle sert de guide pour contraindre l'enfoncement du foret dans la direction définie par le canal de gravure. La colle 9 et/ou les tiges de renfort 7 vont former un guide pour le foret afin que ce dernier suive la forme du canal de gravure 11 comme cela est illustré à la figure 11.

La gravure est plus aisée que dans les modes de réalisation de l'art antérieur où un matériau plus homogène est formé pour réaliser la reconstitution corono-radiculaire ou alors sans maitrise de la configuration d'un canal de gravure.

De manière avantageuse, le matériau formant la matrice se grave plus rapidement que le matériau formant les tiges de renfort 7. Il est donc avantageux de choisir le matériau utilisé pour former le canal de gravure en fonction du matériau utilisé pour contraindre la position du foret 12.

## Revendications

1. Procédé de reconstruction corono-radiculaire sur un modèle de laboratoire, comprenant les étapes successives suivantes :
- Réaliser une empreinte de la chambre pulpaire (5) pour former la partie coronaire de la reconstitution, au moins un canal radiculaire (2) obturé débouchant sur la chambre pulpaire (5);
- Réaliser une prothèse (1) à partir de l'empreinte, la prothèse (1) comportant au moins un canal traversant (3), ledit au moins un canal traversant (3) ayant une extrémité débouchant sur ledit au moins un canal radiculaire (2) ;
- Désobturer ledit au moins un canal radiculaire (2) ;
- Remplir ledit au moins un canal radiculaire (2) et ledit au moins un canal traversant (3) d'une colle (9) ;
- Installer la prothèse (1) de sorte que ledit au moins un canal traversant (3) débouche sur ledit au moins un canal radiculaire (2) désobturé,
- Introduire une pluralité de tiges de renfort (7) dans ledit au moins un canal radiculaire (2) à travers ledit au moins un canal traversant (3), ledit au moins un canal traversant (3) et ledit au moins un canal radiculaire (2) étant remplis par la pluralité de tiges de renfort (2) et la colle (9).

2. Procédé de reconstruction selon la revendication 1, dans lequel le canal traversant (3) est courbe.

3. Procédé de reconstruction selon l'une des revendications précédentes, dans lequel, ledit au moins un canal radiculaire (2) est désobturé sans aléser la paroi latérale dudit au moins un canal radiculaire (2).

4. Procédé de reconstruction selon l'une des revendications précédentes, dans lequel, la pluralité de tiges de renfort (7) est introduite sous la forme d'un faisceau de tiges de renfort (7) fixées les unes aux autres par un élément d'assemblage (8).

5. Procédé de reconstruction selon la revendication précédente, dans lequel l'élément d'assemblage (8) est configuré pour grouper la pluralité de tiges de renfort (7) de manière à former le faisceau de tiges, ledit élément d'assemblage (8) recouvrant partiellement la longueur des tiges de renfort (7).

6. Procédé de reconstruction selon l'une des revendications 4 et 5, dans lequel au moins un faisceau de tiges de renfort (7) comporte une tige additionnelle réalisée dans un matériau se gravant plus rapidement que la pluralité de tiges de renfort (7) de manière à former un canal de gravure (6) privilégiée.

7. Procédé de reconstruction selon la combinaison des revendications 4 et 6, dans lequel l'élément d'assemblage (8) est configuré pour grouper la pluralité de tiges de renfort (7) et la tige additionnelle de manière à former le faisceau de tiges, ledit élément d'assemblage (8) recouvrant partiellement la longueur des tiges de renfort (7), la tige additionnelle étant fixée directement ou indirectement à l'élément d'assemblage (8) entre les tiges de renfort (7)

8. Procédé de reconstruction selon la revendication précédente, dans lequel la tige additionnelle est fixée à une tige de renfort (7) adjacente sur au moins 70% de sa longueur.

9. Procédé de reconstruction selon l'une quelconque des revendications précédentes, dans lequel le faisceau de tiges de renfort (7) comprend de 3 à 15 tiges de renfort (7) et/ou dans lequel les tiges de renfort (7) de la pluralité de tiges de renfort (7) ont des diamètres allant de 0,1mm à 0,5mm

10. Procédé de reconstruction selon l'une quelconque des revendications précédentes, comportant une étape additionnelle de polymérisation de la colle (9) après l'introduction des tiges de renfort (7) dans ledit au moins un canal radiculaire (2) et ledit au moins un canal traversant (3).

11. Procédé de reconstruction selon l'une quelconque des revendications précédentes comportant, avant de réaliser l'empreinte de la chambre pulpaire (5), marquer au moins un canal radiculaire (2) dans une chambre pulpaire (5), le marquage du canal radiculaire (2) étant avantageusement réalisé par un renfoncement à l'entrée du canal radiculaire (2).

12. Procédé selon la revendication 10, **caractérisé en ce que**, avant l'étape additionnelle de polymérisation, une deuxième structure de renfort (4) est déposée à côté de la première structure de renfort (4), la deuxième structure de renfort (4) étant dépourvue de canal de gravure et la première structure de renfort (4) étant disposée au centre du canal radiculaire (2).

13. Reconstitution dentaire corono-radiculaire sur un modèle de laboratoire comportant :
- une prothèse (1) comportant au moins un canal traversant (3), ledit au moins un canal traversant (3) ayant une extrémité débouchant dans au moins un canal radiculaire (2) ;
- une pluralité de tiges de renfort (7) disposée dans ledit au moins un canal radiculaire (2) et ledit au moins un canal traversant (3) de sorte qu'une même tige de renfort (7) relie un canal traversant (3) avec un canal radiculaire (2),
- une colle (9) remplissant le canal radiculaire (2) et le canal traversant (3) ;
reconstitution dentaire **caractérisée en ce que** la prothèse (1) est réalisée dans un matériau ayant un module de Young plus élevé que le module de Young de la colle (9) et éventuellement plus élevé que le module de Young de la pluralité de tiges de renfort (7).

14. Reconstitution dentaire corono-radiculaire selon la revendication précédente dans laquelle la pluralité de tiges de renfort (7) est introduite sous la forme d'un faisceau de tiges fixées les unes aux autres par un élément d'assemblage (8) et dans lequel au moins un faisceau de tiges comporte une tige additionnelle réalisée dans un matériau se gravant plus rapidement que la pluralité de tiges de renfort (7) de manière à former un canal de gravure (6).

15. Procédé d'ouverture d'une reconstitution dentaire corono-radiculaire d'un modèle de laboratoire selon la revendication précédente comportant la gravure du canal de gravure au moyen d'un foret (11) en utilisant les tiges de renfort (7) comme guide pour l'enfoncement d'un foret (11).
